# EUROPÄISCHE PATENTSCHRIFT

(11) **EP 0 900 852 B1**
(45) Veröffentlichungstag und Bekanntmachung des Hinweises auf die Patenterteilung: **19.05.2004**
(21) Anmeldenummer: 98810850.2
(22) Anmeldetag: 27.08.1998
(51) Int. Cl.: C21D 9/32, B23P 15/14, F16H 55/06

(54) **Verfahren zum Herstellen eines Getrieberades**
Process for manufacturing gear wheels
Procédé de fabrication de roues d'engrenage

(30) Priorität: 04.09.1997 DE 19738487
(43) Veröffentlichungstag der Anmeldung: 10.03.1999
(73) Patentinhaber: ALSTOM Technology Ltd, 5400 Baden (CH)
(72) Erfinder: Wettstein, Hans, Dr., 5442 Fislisbach (CH)

(56) Entgegenhaltungen:
- DE-A- 2 362 977
- DE-B- 1 003 779
- O. GANS: "Dimensionierung und Fertigung von Grosszahnrädern" WT-ZEITSCHRIFT FÜR INDUSTRIELLE FERTIGUNG, Nr. 9, 1984, Seiten 551-556, XP008011231

## Beschreibung

### Technisches Gebiet

Die Erfindung geht aus von einem Verfahren zum Herstellen eines Getrieberades nach dem Oberbegriff des ersten Anspruches.

### Stand der Technik

Bei grossen Getrieberädem sind besondere Werkstoffauswahl und Härtung unerlässlich, um die erforderlichen Eigenschaften der Verzahnung der Getrieberäder hinsichtlich Verschleissfestigkeit und Biegeermüdungsfestigkeit zu erreichen. Die häuptsächlichen Herstellungsschritte eines Getrieberades bestehen aus dem Schmieden des Rohlings, Vorbearbeiten auf Vormass und einer Werkstoffprüfung, Härten, Anlassen und Fertigbearbeitung auf Endmass mittels Schleifen. Durch den Härte- und Anlassschritt wird in der Oberflächenschicht des Getrieberades eine Martensitumwandlung bewirkt, die an der Oberfläche Druckeigenspannungen und im Innern des Rades Zugeigenspannungen zur Folge hat. Mit zunehmendem Verhältnis von Länge zu Durchmesser des Getrieberades werden diese inneren Spannungen immer mehr zu dreidimensionalen Zugspannungen, die an Werkstofffehlem zu Spannungsspitzen und spontantem Risswachstum führen können.

Die Spannungen des Betriebes, einerseits infolge Temperaturveränderungen und anderseits infolge der Fliehkraft überlagern sich den Eigenspannungen und verschärfen die Situation zusätzlich, indem sie zyklisches oder instabiles Risswachstum bewirken können. Da die Fliehkraftspannungen mit der Verzahnungsgeschwindigkeit und die Wärmespannungen mit der Grösse zunehmen, wird das Risiko solcher Probleme umso grösser, je grösser und je balliger das Getrieberad wird und je schneller es sich dreht.

### Darstellung der Erfindung

Der Erfindung liegt die Aufgabe zugrunde, bei einem Verfahren zum Herstellen eines Getrieberades der eingangs genannten Art für Grossgetriebe entsprechende Massnahmen zu treffen, um die Standzeit zu erhöhen.

Erfindungsgemäss wird dies durch die Merkmale des ersten Anspruches erreicht.

Kern der Erfindung ist es also, dass das Getrieberad gehärtet und angelassen wird, dass das Getrieberad wieder auf Anlasstemperatur gebracht und geschleudert wird, dass das abgekühlte Getrieberad geschleudert wird und dass die Verzahnung auf Endmass geschliffen wird.

Die Vorteile der Erfindung sind unter anderem darin zu sehen, dass durch das Schleudern bei Anlasstemperatur an den risswachstumsgefährdeten Zonen Druckvorspannungen erzeugt werden, die ein späteres Risswachstum bei Betrieb des Getrieberades verhindern. Durch den zweiten Schleuderschritt können fehlerbehaftete Getrieberäder aussortiert werden, was die Sicherheit des Endproduktes deutlich erhöht. Die Durchführung der Schleudervorgänge im vorbearbeiteten statt fertigen Zustand vermindert den Wertverlust im Falle eines fehlerbehafteten Getrieberades, welches aussortiert werden muss. Durch die Vermeidung des Schleifens von fehlerhaften Getrieberädern wird die Wirtschaftlichkeit der Herstellung der Getrieberäder deutlich erhöht.

Weitere vorteilhafte Ausgestaltungen der Erfindung ergeben sich aus den Unteransprüchen.

### Kurze Beschreibung der Zeichnung

In der Zeichnung ist ein Ausführungsbeispiel der Erfindung schematisch dargestellt.
Es zeigen:
- Fig. 1: einen Teillängsschnitt durch ein Getrieberad;
- Fig. 2: einen Teilquerschnitt durch das Getrieberad aus Fig. 1 entlang der Linie II-II.

Es sind nur die für das Verständnis der Erfindung wesentlichen Elemente gezeigt.

### Weg zur Ausführung der Erfindung

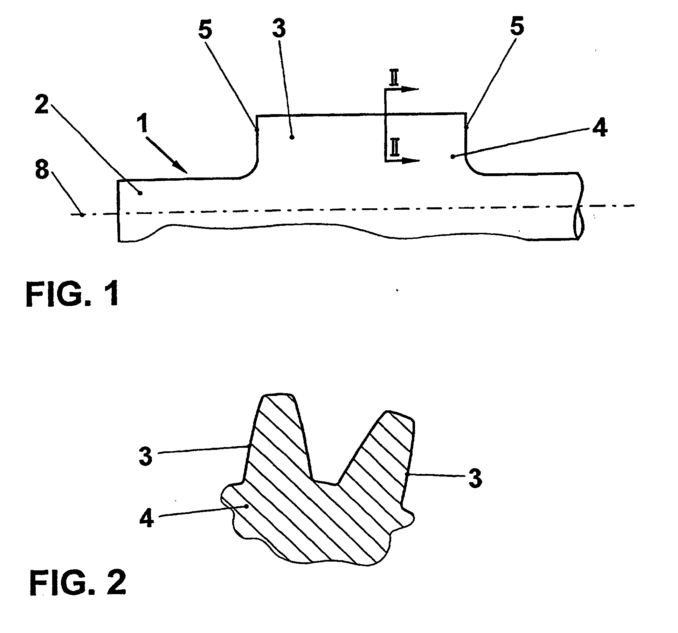

In den Fig. 1 und 2 ist ein Getrieberad 1 dargestellt, das im wesentlichen aus einer Welle 2, einem Getrieberadkörper 4 und Zähnen 3 besteht, wobei die Welle, der Getrieberadkörper und die Zähne aus einem Stück bestehen können. Das Getrieberad 1 dreht sich um eine Drehachse 8 und die Zähne 3 des Getrieberades 1 greifen zur Kraftübertragung mindestens in die Zähne eines weiteren nicht dargestellten Getrieberades.

Das Getrieberad 1 wird geschmiedet, auf Vormass bearbeitet und auf Materialfehler geprüft. Danach folgt das Oberflächenhärten und das Anlassen. Danach werden vorzugsweise die Stimflächen 5 des Getrieberades 1 entfernt und vorbearbeitet. Dann wird das Getrieberad 1 wieder auf Anlasstemperatur gebracht. Das auf Anlasstemperatur gehaltene Getrieberad wird in ein explosionssicheres Schleuderloch eingebracht, vorzugsweise an einer vertikalen Achse hängend, so dass das Getrieberad 1 um seine Drehachse 8 gedreht werden kann. Solche explosionssicheren Schleuderlöcher sind beispielsweise für Triebwerkscheibenprüfungen bekannt. Danach wird das auf Anlasstemperatur gehaltene Getrieberad bei Drehzahlen die höher liegen als die Betriebsdrehzahl des Getrieberades geschleudert, vorzugsweise bei einer Drehzahl von ungefähr 130 bis 160% der Betriebsdrehzahl des Getrieberades.

Der Schleudervorgang erzeugt eine, dem durch den Härtungsvorgang erzeugten dreidimensionalen Zugspannungszustand überlagerte ebene Spannungsverteilung. Dadurch tritt, begünstigt vom erhöhten Temperaturniveau auf Anlasstemperatur, ein Fliessvorgang an potentiellen inneren Werkstoffehlern (Ungänzen) auf. Dies hinterlässt an diesen im Betrieb risswachstumsgefährdeten Zonen Druckvorspannungen. Dadurch wird ein von Werkstofffehlern ausgehendes späteres Risswachstum durch die Betriebszyklen des Getrieberades 1 ganz verhindert.

Anschliessend wird am abgekühlten oder sogar unterkühlten, beispielsweise auf Minus 50°C gekühlten, Rad ein kontrollierendes Schleudern in der gleichen Aufstellung gemacht. Bei der tieferen Temperatur ist die Zähigkeit des Werkstoffes so klein, dass durch diesen Vorgang sicher kontrolliert werden kann, ob das Getrieberad 1 fehlerbehaftet ist, da fehlerbehaftete Getrieberäder beim Schleudern explodieren würden. Nach dem Schleudervorgang im abgekühlten Zustand wird das Getrieberad 1 mittels Schleifen auf Endmass gebracht.
Die Durchführung beider Schritte erhöht sowohl die Ausbringung als auch die Sicherheit des Endproduktes. Die Durchführung im vorbearbeiteten statt fertigen Zustand vermindert den Wertverlust im Falle eines Ausfalles des Rades.

Selbstverständlich ist die Erfindung nicht auf das gezeigte und beschriebene Ausführungsbeispiel beschränkt.

### Bezugszeichenliste

- 1: Getrieberad
- 2: Welle
- 3: Zahn
- 4: Getrieberadkörper
- 5: Stirnfläche
- 8: Drehachse

## Patentansprüche

1. Verfahren zum Herstellen eines Getrieberades (1), im wesentlichen bestehend aus einer Welle (2) und einer Verzahnung (3), in dem
das Getrieberad (1) gehärtet und angelassen wird, **dadurch gekennzeichnet, dass** das Getrieberad (1) wieder auf Anlasstemperatur gebracht und geschleudert wird,
dass danach das abgekühlte oder tiefgekühlte Getriebrad (1) geschleudert wird und dass die Verzahnung (3) auf Endmass geschliffen wird.

2. Verfahren zum Herstellen eines Getrieberades (1) nach Anspruch 1,
**dadurch gekennzeichnet,**
**dass** nach dem Härten und Anlassen und bevor das Getrieberad (1) wieder auf Anlasstemperatur gebracht und geschleudert wird die aufgehärteten Oberflächen der Stimflächen (5) wegbearbeitet werden.

3. Verfahren zum Herstellen eines Getrieberades (1) nach einem der vorhergehenden Ansprüche,
**dadurch gekennzeichnet,**
**dass** das Getrieberad (1) bei Drehzahlen höher als die Betriebsdrehzahl des Getrieberades geschleudert wird.

4. Verfahren zum Herstellen eines Getrieberades (1) nach Anspruch 3,
**dadurch gekennzeichnet,**
**dass** das Getrieberad (1) bei einer Drehzahlen von 130 bis 160% der Betriebsdrehzahl des Getrieberades geschleudert wird.

5. Verwendung des Verfahrens (1) nach einem der Ansprüche 1 bis 4 zur Herstellung eines grossen Getrieberades

## Claims

1. Method of manufacturing a gear wheel (1), essentially comprising a shaft (2) and a tooth system (3), in which the gear wheel (1) is hardened and annealed, **characterized in that** the gear wheel (1) is brought to annealing temperature again and spun, wherein the cooled-down or supercooled gear wheel (1) is then spun, and **in that** the tooth system (3) is ground to final size.

2. Method of manufacturing a gear wheel (1) according to Claim 1, **characterized in that**, after the hardening and annealing and before the gear wheel (1) is brought to annealing temperature again and spun, the hardened surfaces of the end faces (5) are machined away.

3. Method of manufacturing a gear wheel (1) according to either of the preceding claims, **characterized in that** the gear wheel (1) is spun at speeds higher than the operating speed of the gear wheel.

4. Method of manufacturing a gear wheel (1) according to Claim 3, **characterized in that** the gear wheel (1) is spun at speeds of 130 to 160% of the operating speed of the gear wheel.

5. Use of the method (1) according to one of Claims 1 to 4 of manufacturing a large gear wheel.

## Revendications

1. Procédé de fabrication d'une roue de transmission (1) essentiellement constituée d'un arbre (2) et d'une denture (3), dans lequel la roue de transmission (1) est durcie et subit un revenu, **caractérisé en ce que** la roue de transmission (1) est de nouveau amenée à la température de revenu et est centrifugée, et **en ce qu'**ensuite la roue de transmission (1) refroidie ou sur-refroidie est centrifugée, la denture (3) étant enfin meulée jusqu'à ses dimensions finales.

2. Procédé de fabrication d'une roue de transmission (1) selon la revendication 1, **caractérisé en ce qu'**après le durcissement et le revenu et avant que la roue de transmission (1) soit de nouveau amenée à température de recuit et centrifugée, les surfaces durcies des surfaces frontales (5) sont usinées.

3. Procédé de fabrication d'une roue de transmission (1) selon l'une des revendications précédentes, **caractérisé en ce que** la roue de transmission (1) est centrifugée à des vitesses de rotation supérieures à la vitesse de rotation de la roue de transmission en fonctionnement.

4. Procédé de fabrication d'une roue de transmission (1) selon la revendication 3, **caractérisé en ce que** la roue de transmission (1) est centrifugée à une vitesse de rotation qui correspond à 130-160% de la vitesse de rotation de la roue de transmission en fonctionnement.

5. Utilisation du procédé selon l'une des revendications 1 à 4 pour la fabrication d'une grande roue de transmission.
